# EUROPEAN PATENT APPLICATION

(11) **EP 4 703 237 A1**
(43) Date of publication of application: **04.03.2026**
(21) Application number: 25163002.6
(22) Date of filing: 11.03.2025
(51) Int. Cl.: B62B 5/00, B62B 3/10

(54) **A DOLLY**

(30) Priority: 28.08.2024 GB 202412597
(71) Applicant: ROBE lighting s.r.o., 75661 Roznov pod Radhostem (CZ)
(72) Inventor: Milmer, Jonny, NN3 8RF Northampton (GB)
(74) Representative: Handsome I.P. Ltd

(57) **Abstract**

A dolly (100) comprising a substantially planar platform (110) supported on at least three wheels (120) for movement of the platform, the dolly further comprising a battery located between the wheels, the battery configured to provide electrical power to electrical equipment supported on the platform, in use.

## Description

The present invention relates generally to a dolly and finds particular, although not exclusive, utility in the transporting of lighting equipment on stages.

Dollies typically comprise a board on wheels, and are used for moving relatively heavy objects. They are known for transporting items, such as electrical equipment, from one location to another. Once the electrical equipment has been moved to a desired location, the electrical equipment is typically removed from the dolly, and electrical power is provided to the electrical equipment. This typically requires running power cables between a power socket and the electrical equipment. This can place restrictions on where the electrical equipment can be located, and can present trip hazards.

Alternatively, batteries may be used to power the electrical equipment. However, this also requires running power cables between the batteries and the electrical equipment, which can present a trip hazard. Some batteries may be portable and may be moved to a location near to the electrical equipment. However, this requires more space to accommodate both the electrical equipment and the batteries, requires both the batteries and electrical equipment to be moved, and may still present a trip hazard due to power cables running between the batteries and the electrical equipment. These problems are exacerbated on stages, such as theatre production stages, where space is at a premium.

A further disadvantage of the prior art systems described above is that it may be time consuming to move both the electrical equipment and the power source, and it may not be possible to move both of these components without interrupting the power supply to the electrical equipment. For example, the electrical equipment may need to be disconnected from a power socket and connected to another power socket. Alternatively, it may be too difficult to move both the electrical equipment and the battery simultaneously, such that these components may need to be disconnected, moved to a different location, and reconnected.

It is an aim of the present invention to overcome these problems.

According to a first aspect, there is provided a dolly comprising a substantially planar platform supported on at least three wheels for movement of the platform, the dolly further comprising a battery located between the wheels, the battery configured to provide electrical power to electrical equipment supported on the platform, in use.

In this way, electrical equipment may be placed on top of the platform, thus saving space. Examples of such electrical equipment include 360 degree rotatable and directable spotlights, and amplifiers.

Furthermore, the dolly may be moved to different locations while electrical power is supplied to the electrical equipment, thereby improving the portability of the electrical equipment and improving safety by avoiding the need to have power cables running between a power source, such as a power socket, and the electrical equipment. **In** addition, both the electrical equipment and the battery may be moved simultaneously, easily, and without interrupting the power supply to the electrical equipment.

The dolly may further comprise one or more first attachment points, wherein, in use, the one or more first attachment points may be configured to secure the electrical equipment to the platform, or wherein, in use, the one or more first attachment points may be configured to secure a frame to the platform, the frame configured to support the electrical equipment. The first attachment points may comprise holes, which may be threaded, to receive fixing means such as bolts, screws, or clamps.

In this way, electrical equipment may be secured to the dolly (e.g., directly, or via a frame) thereby reducing the risk of the electrical equipment falling off the dolly, in use. In particular, the attachment points reduce the risk of the electrical equipment falling off the dolly when the dolly is moved between different locations. The attachment points also reduce the risk of the electrical equipment falling off the dolly due to a user accidentally knocking the electrical equipment.

A further advantage associated with the one or more first attachment points being configured to secure a frame to the platform is that the frame may be held securely by the dolly, while electrical power is provided to the electrical equipment supported by the frame. A frame is a structure to which electrical equipment, such as stage lighting, may be attached. A frame may be referred to as an accessory mount. This avoids the need for the frame to be secured to a separate structure or surface (e.g., the ground). In addition, this feature enables electrical equipment, a frame configured to support the electrical equipment, and a battery, to be moved simultaneously and without interruption to the electrical power supply to the electrical equipment.

The dolly may further comprise one or more second attachment points configured to secure the dolly to a truss, in use. A truss may be used to secure electrical equipment, such as stage lighting, at an elevated position relative to the stage. The second attachment points may comprise holes, which may be threaded, to receive fixing means such as bolts, screws, or clamps. Alternatively, the second points may comprise clamps configured to fit around typical truss members.

In this way, the dolly may be secured at a location above the stage. Advantageously, this feature avoids the need to run power cables between the electrical equipment and a power source, which may involve running power cables along the truss and associated supporting structure. In addition, by virtue of the battery being a component of the dolly, only the dolly needs to be supported by the truss.

The one or more second attachment points may be located on the same side of the platform as the wheels.

The wheels may be arranged such that they do not protrude beyond the perimeter of the surface of the platform that supports the electrical equipment, in use.

In this way, a dolly may be located immediately adjacent another structure, such as a wall, without any gap therebetween. Also, this allows two or more dollies to be located immediately adjacent one another such that there is substantially no gap between them. This feature enables the two or more dollies to support larger electrical equipment by, for example, providing a larger surface area to support the electrical equipment. This feature also provides two or more batteries to be utilised.

For example, four dollies may be arranged together, in a square shape, with a frame arranged in the centre, resting on each of the four dollies. This allows a taller frame to be supported, than otherwise, as a greater area of support is provided.

The height of the dolly may be 40% or less of the longer of the width of the dolly and the length of the dolly, the height of the dolly being the dimension of the dolly measured in a perpendicular direction from a planar surface on which the wheels rest, in use, to the planar platform, used to support the electrical equipment, in use.

The height of the platform may be in the range 130mm to 160mm, and may be 138mm.

In this way, the dolly may have a relatively low centre of gravity, such that the dolly is more stable and less likely to topple over, particularly when the platform of the dolly is used to support electrical equipment, particularly via a frame. This feature may also improve the portability of the dolly when the dolly is not in use (e.g., it may be easier for a user to pick up the dolly when it is not in use, due to the shape of the dolly being more convenient for carrying).

The dolly may further comprise one or more handles. In this way, the dolly may be moved, or transported, between different locations more easily.

The dolly may further comprise a wireless digital multiplex, DMX, receiver, comprising means for communication with the electrical equipment supported on the platform, in use.

In this way, the DMX receiver may wirelessly receive instructions from a remote controller. In turn, these instructions may be passed to the electrical equipment located on top of the platform, in use. These instructions may be sent either wirelessly, and/or by wired communication.

A single cable running between the dolly and the electrical equipment may be used to provide both power from the battery, and a control signal received at the wireless DMX receiver, to the electrical equipment. Alternatively, a first cable running between the dolly and the electrical equipment may provide power from the battery to the electrical equipment, and a second cable running between the dolly and the electrical equipment may provide a signal received at the wireless DMX receiver to the electrical equipment.

The dolly may further comprise a charging system for charging the battery. The charging system may be a fully-integrated charging system.

The battery may be configured to provide electrical power at 12 volts and/or 230 volts.

The dolly may comprise independent control switches to control the 12 volts and 230 volts power supplies.

The dolly may be further configured to charge the battery from an external power source, in use, and also configured to provide electrical power, from the external power source, to the electrical equipment supported on the platform, in use, without affecting the charging of the battery.

This "loop-through" feature may allow electricity to be supplied to the electrical equipment power while the battery is charging, without affecting the charging of the battery.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is a perspective view of a dolly.
Figure 2 is a perspective view of the dolly of Figure 1, including a frame attached thereto.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein. Likewise, method steps described or claimed in a particular sequence may be understood to operate in a different sequence.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other. For instance, wireless connectivity is contemplated.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any one embodiment or aspect of the invention may be combined in any suitable manner with any other particular feature, structure or characteristic of another embodiment or aspect of the invention, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances. The use of the term "any" may mean "all" and/or "each" in certain circumstances.

The principles of the invention will now be described by a detailed description of at least one drawing relating to exemplary features. It is clear that other arrangements can be configured according to the knowledge of persons skilled in the art without departing from the underlying concept or technical teaching, the invention being limited only by the terms of the appended claims.

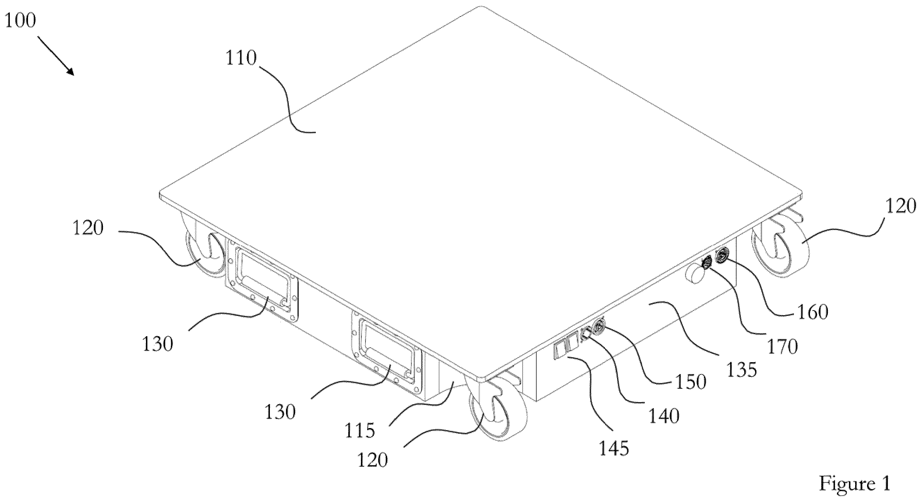

Figure 1 is a perspective view of a dolly 100. The dolly has a substantially planar, relatively thin, square-shape platform 110 supported on four caster-like wheels 120, one at each corner. The platform may have a size in the range of 200 to 1000mm each side. In one example, the sides each have a length of 750mm.

A battery compartment 115 is located between the wheels 120 and underneath the platform 110. Its depth is less than the distance between the top of the platform 110 and the underside of the wheels 120 such that there is clearance between the underside of the compartment 135 and a surface on which the dolly may rest/move on.

Two recessed handles 130 are arranged on one side of the battery compartment 115.

Handles (not shown) may also be arranged within the top of the planar surface.

On another side of the battery compartment 115, a control panel 135 is arranged. This includes a first socket 140 for enabling connection of the dolly to a mains power supply. This supply may be sued to charge the battery, (not shown, but within the battery compartment 115). A second socket 150 is provided to provide electrical power from the mains power supply, which supplies the dolly via the first socket 140, to a piece of electrical apparatus, such as a moving head wash light.

A third socket 160 is provided on the panel 135 configured to provide electrical power from the battery. For example, a power cable may connect the third socket 160 to a piece of electrical equipment such that the electrical equipment is powered from the battery of the dolly (and not from the mains power supply).

A fourth socket 170 is provided on the panel 135 and is configured to output control signals to electrical equipment. These signals may have been received, in use, by a DMX wireless receiver (not shown) arranged within the dolly 100.

The sockets may be arranged to connect using stage lighting industry standard PowerCON (RTM) TRUE1 power connectors.

The panel 135 may include (not shown) a means of displaying the current amount of charge in the battery.

The panel 135 includes switches 145 for independently controlling the 12V internal circuit and the 230V input.

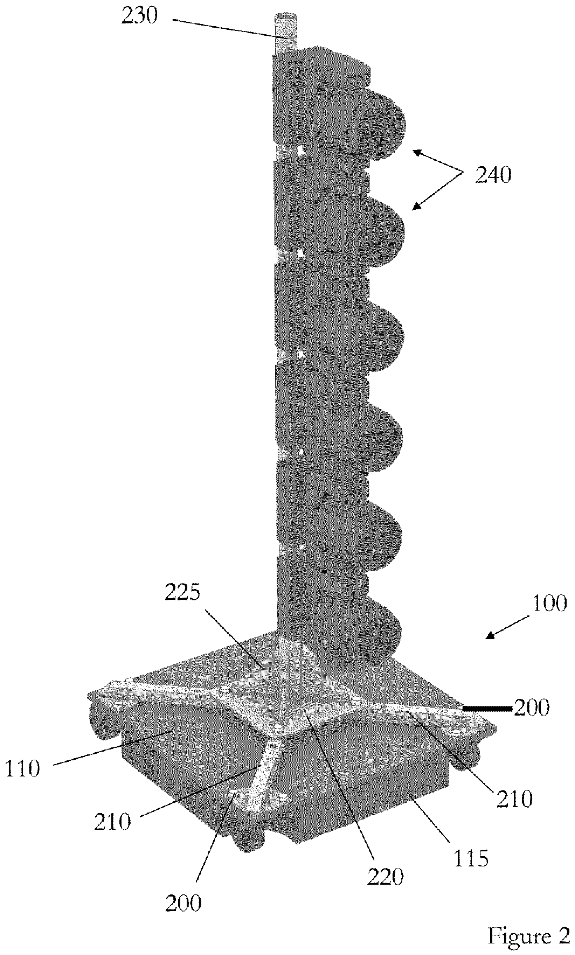

Figure 2 shows the doll 100 in perspective with substantially rectilinear supports 210 attached to the top of the planar surface 110. A support 210 extends from each corner into the centre of the planar surface 110, forming an overall cross shape. The supports 210 are attached to the planar surface 110 by means of bolts 200 which extend through flanges arranged on either side of the supports at the ends nearest the corners of the planar surface. Corresponding holes, or attachment points (not shown) may be arranged within the planar surface to receive the bolts.

At the centre of the surface 110, where the supports 210 meet, a square shape plate 220 is arranged. This is bolted to the four supports 210. Extending perpendicularly from the plate 220 is a rod 230. Gussets 225 extend between the rod 230 and the plate 220 to strengthen the structure.

To this rod, six stage lights 240 have been attached in a vertical arrangement. Each light 240 may be connected to the battery arranged with the battery compartment 115. Accordingly, it may be seen that the dolly is able to both movably support and independently power these six lights.

Other frames and trusses may be attached to the top of the planar surface 110 using the attachment points.

The battery may provide 2000W maximum at sustained power delivery at 230V for 3 hours, and 500W for 12 hours. It also may provide 4000W maximum surge power delivery at 230V.

The dolly may be able to adequately accept and move with a 550kg load capacity.

## Claims

1. A dolly comprising a substantially planar platform supported on at least three wheels for movement of the platform, the dolly further comprising a battery located between the wheels, the battery configured to provide electrical power to electrical equipment supported on the platform, in use.

2. The dolly according to claim 1, the dolly further comprising one or more first attachment points, wherein, in use, the one or more first attachment points are configured to secure the electrical equipment to the platform, or wherein, in use, the one or more first attachment points are configured to secure a frame to the platform, the frame configured to support the electrical equipment.

3. The dolly according to any preceding claim, the dolly further comprising one or more second attachment points configured to secure the dolly to a truss, in use.

4. The dolly according to any preceding claim, wherein the wheels are arranged such that they do not protrude beyond the perimeter of the surface of the platform that supports the electrical equipment, in use.

5. The dolly according to any preceding claim, wherein the height of the dolly is 40% or less of the longer of the width of the dolly and the length of the dolly, the height of the dolly being the dimension of the dolly measured in a perpendicular direction from a planar surface on which the wheels rest, in use, to the planar platform, used to support the electrical equipment, in use.

6. The dolly according to any preceding claim, the dolly further comprising one or more handles.

7. The dolly according to any preceding claim, the dolly further comprising a wireless digital multiplex, DMX, receiver, comprising means for communication with the electrical equipment supported on the platform, in use.

8. The dolly according to any preceding claim, the dolly further comprising a charging system for charging the battery.

9. The dolly according to any preceding claim, wherein the battery is configured to provide electrical power at 12 volts and/or 230 volts.

10. The dolly according to any preceding claim, the dolly further configured to charge the battery from an external power source, in use, and also configured to provide electrical power, from the external power source, to the electrical equipment supported on the platform, in use, without affecting the charging of the battery.
